# EUROPEAN PATENT APPLICATION

(11) **EP 4 648 234 A1**
(43) Date of publication of application: **12.11.2025**
(21) Application number: 23914422.3
(22) Date of filing: 21.11.2023
(51) Int. Cl.: H01S 3/30, H04B 10/2537, H04B 10/077

(54) **ULTRA-WIDEBAND RAMAN AMPLIFIER FOR ELIMINATING INFLUENCE OF OSC SIGNAL ON GAIN, AND CONTROL METHOD**

(30) Priority: 03.01.2023 CN 202310000745
(71) Applicant: Accelink Technologies Co., Ltd., Wuhan, Hubei 430000 (CN); Wuhan Accelink Electronics Technologies Co., Ltd., Wuhan Hubei 430205 (CN)
(72) Inventor: FU, Chengpeng, Wuhan Hubei 430000 (CN); TAO, Jintao, Wuhan Hubei 430000 (CN); ZHANG, Cuihong, Wuhan Hubei 430000 (CN); ZHANG, Yazhou, Wuhan Hubei 430000 (CN); LE, Menghui, Wuhan Hubei 430000 (CN); YU, Chunping, Wuhan Hubei 430000 (CN); ZHOU, Hongjian, Wuhan Hubei 430000 (CN); BU, Qinlian, Wuhan Hubei 430000 (CN)
(74) Representative: Frenkel, Matthias Alexander
(86) International application number: PCT/CN2023/132926
(87) International publication number: WO 2024/146287

(57) **Abstract**

An ultra-wideband Raman amplifier for eliminating the influence of an OSC signal on gain, and a control method thereof. Before being coupled to pump optical signals of n pump lasers (102, 103, 104, 105, 106, 107), an OSC detection optical signal is further coupled to a first optical splitter (118), and the measured OSC detection optical signal strength is transferred to a control unit (101) by means of a first detector (115-5) at an output port side of the first optical splitter (118), so that the control unit (101) adjusts, according to the OSC detection optical signal strength, the optical power of one or more pump lasers, consistent with or similar to a frequency band of the OSC detection optical signal, in the n pump lasers (102, 103, 104, 105, 106, 107) which are controlled by the control unit (101). The influence of the power of the supervising channel OSC on the gain control accuracy can be eliminated, the power of a pump laser having a longest wavelength is reduced, and the power consumption is reduced, thereby improving the gain control accuracy of the whole system.

## Description

### CROSS-REFERENCE TO RELATED APPLICATIONS

This application claims priority to the following patent application:
(1) a Chinese patent application filed with the China National Intellectual Property Administration on January 3, 2023, with the application number 202310000745.7, titled "Ultra-Wideband Raman Amplifier for Eliminating Influence of OSC Signal on Gain and Control Method thereof".

### TECHNICAL FIELD OF THE DISCLOSURE

The present disclosure relates to the field of optical communication technologies, and in particular, to an ultra-wideband Raman amplifier for eliminating influence of an OSC signal on gain and a control method thereof.

### BACKGROUND

With the rapid evolution of new telecom services such as 5G, video on demand, virtual reality (VR), mobile Internet of Things, and DCI data communication, the construction demand for bandwidth in backbone transmission networks is increasing. Compared with the traditional C-band (1528-1568 nm, totaling 40 nm) transmission bandwidth, C++ and L++ ultra-wideband Raman fiber amplifiers cover an ultra-large bandwidth of 1524-1627 nm, totaling 103 nm. In a transmission system, to monitor the operation status of devices in the system, an optical supervising channel (OSC) is required to monitor the operation status of the devices. According to international standards such as ITU-T, the OSC wavelength falls within a range of 1510±10 nm. To reduce costs, manufacturers often omit TEC control for the OSC transmitter module, as long as the wavelength does not exceed 1500 nm and 1520 nm. However, for Raman fiber amplifiers to cover the entire C++ & L++ ultra-wideband communication system, the longest pump wavelength exceeds 1510 nm, while the shortest pump wavelength is around 1420 nm. For the C++ & L++ ultra-wideband communication system, if the OSC still uses a traditional 1510 nm laser without TEC, since a laser chip has no TEC control and is affected by temperature, the wavelength of the OSC will change with temperature at near 1510 nm. When the pump wavelength coincides with the OSC wavelength, the OSC signal cannot be demultiplexed and error-detected. Therefore, the OSC laser chip must employ TEC control to limit wavelength variations to ±1 nm. To reduce the isolation between the pump wavelength and the OSC wavelength, the OSC wavelength should deviate from the pump wavelength by more than 2-4 nm. The wavelength interval between the shortest and longest wavelengths of the Raman pump lasers exceeds 90 nm, leading to strong interactions between pumps. In order to achieve gain flatness in the whole band, the power ratio between each wavelength will be very complex. Since the longest pump wavelength is near the peak of the amplified shortest wavelength (13.2 THz), even minor power fluctuations in the longest pump wavelength and its neighboring wavelengths can significantly impact gain. Although the OSC wavelength is not inside the Raman pump module, in practical engineering applications, the OSC wavelength will be transmitted in the fiber together with the pump wavelength and the signal wavelengths. When the Raman gain is relatively large, the power of the OSC wavelength will greatly affect the calibrated Raman gain.

In view of this, overcoming the defects of the prior art is an urgent problem to be solved in the technical field.

### SUMMARY

The technical problem to be solved by the present disclosure is that, because the OSC wavelength is not inside the Raman pump module, in practical engineering applications, the OSC wavelength is transmitted in the fiber together with the pump wavelength and the signal wavelength, and when the Raman gain is relatively large, the power of the OSC wavelength will greatly affect the calibrated Raman gain.

The present disclosure adopts the following technical solutions:
An ultra-wideband Raman amplifier for eliminating influence of an OSC signal on gain and a control method thereof.

In a first aspect, the present disclosure provides an ultra-wideband Raman amplifier for eliminating influence of an OSC signal on gain, comprising:
n pump lasers connected through multiple wavelength division multiplexers (WDMs) in sequence to form an ultra-wideband pump optical signal source, wherein each pump laser emits pump laser in a band covering its respective wavelength band;
an OSC signal receiving port that couples an OSC detection optical signal acquired by the OSC signal receiving port itself with pump optical signals of the n pump lasers through a first wavelength division multiplexer, and further couples the coupled pump optical signals to a transmission optical path through a second wavelength division multiplexer to complete pump amplification of a data optical signal and channel monitoring of the transmission optical path by the OSC detection optical signal;
wherein before being coupled with the pump optical signals of the n pump lasers, the OSC detection optical signal is further coupled with a first optical splitter, and a first detector on an output port side of the first optical splitter transfers detected intensity of the OSC detection optical signal to a control unit, so that the control unit adjusts optical power of one or more pump lasers, having a same or similar frequency band with the OSC detection optical signal, in the n pump lasers controlled by the control unit according to the intensity of the OSC detection optical signal.

Preferably, the n pump lasers connected through multiple wavelength division multiplexers in sequence to form the ultra-wideband pump light source specifically include:
each pump laser has a pump branch optical path and a shared pump main optical path;
each respective pump branch optical path couples its own pump optical signal to the pump main optical path through a total wavelength division multiplexer, so as to transmit an integrated pump optical signal to the transmission optical path through the second wavelength division multiplexer connected to the pump main optical path; or each pump branch optical path couples its own pump light to the pump main optical path through its owned wavelength division multiplexer in a serial coupling manner or a parallel coupling manner.

Preferably, the OSC signal receiving port coupling the detection optical signal acquired by the OSC signal receiving port itself with the pump optical signals of the n pump lasers through the first wavelength division multiplexer, specifically includes:
acquiring a central wavelength of a corresponding OSC signal, and according to the central wavelength of the OSC signal, determining one or two target pump lasers in the owned n pump lasers having a wavelength of the pump optical signals closest to the central wavelength of the OSC signal;
arranging the first wavelength division multiplexer on a pump optical path of the one or two target pump lasers, and coupling the OSC signal receiving port with one of input ports of the first wavelength division multiplexer, wherein another input port of the first wavelength division multiplexer is coupled with the pump optical path of the corresponding target pump laser.

In a second aspect, the present disclosure provides a control method for an ultra-wideband Raman amplifier for eliminating influence of an OSC signal on gain, using the ultra-wideband Raman amplifier for eliminating the influence of an OSC signal on gain according to the first aspect, the method comprising:
adjusting, by a control unit, working power of the n pump lasers according to optical intensity of an amplified data optical signal to be achieved by a transmission optical path;
inputting an OSC detection optical signal after the working power of the n pump lasers is adjusted;
when the power of the OSC detection optical signal is acquired according to a first detector, triggering, by the control unit, to adjust optical power of one or more pump lasers having a same or similar frequency band with the OSC detection optical signal, in the n pump lasers controlled by the control unit, so that corresponding intensity of amplification of the data optical signal is kept consistent.

Preferably, when adjusting the optical power of one or more pump lasers, having the same or similar frequency band with the OSC detection optical signal, in the n pump lasers controlled by the control unit, it is confirmed that a pump laser which is calibrated to be adjusted is a pump laser with a longest wavelength in the n pump lasers, the method specifically comprising:
denoting power of the pump laser with the longest wavelength as P_{pump-final}, a wavelength of the pump laser with the longest wavelength as λ_{pump-final}, power of the OSC detection optical signal as P_{osc-1}, P_{osc-2}, ... , P_{osc-n}, and wavelengths of the OSC detection optical signal as λ_{osc}, including λ_{osc-1}, λ_{osc-2}, . . . , λₒₛₑ₋ₙ, n≥ 1; setting a proportionality coefficient of the power of the OSC detection optical signal equivalent to pump power of the longest wavelength as K_{effective}, and a wavelength interval between the wavelength of the OSC detection optical signal and the wavelength of the pump laser with the longest wavelength as Δλ=λ_{pump-final}-λ_{osc};
performing linear fitting on an equivalent coefficient and the wavelength interval, which is denoted as: K_{effective}=k×Δλ+b;
in actual gain control of the Raman amplifier, denoting required pump power of the longest wavelength as P_{pump-final-controlling}, then P_{pump-final-controlling}=K_{effective-1} ×P_{osc-1}+K_{effective-2}×P_{osc-2}+......+K_{effective-n}×P_{osc-n}, **wherein** if a wavelength λ_{osc-i} does not exist in the corresponding OSC detection optical signal in a real-time situation, a corresponding parameter P_{osc-i} in the formula is 0, and i is a parameter value between 1 and n.

Preferably, the control unit according to the optical intensity of the amplified data optical signal to be achieved by the transmission optical path specifically includes:
establishing a relationship between out-of-band ASE and gain, the relationship being: Out-of-band ASE=K×Gain+b+pointloss; and realizing control over the gain by controlling power of the out-of-band ASE, where K is a linear relationship constant between the out-of-band ASE and the gain, b is an influence parameter, and pointloss is connection loss between the pump laser and an optical fiber.

In a third aspect, the present disclosure further provides a control method for an ultra-wideband Raman amplifier for eliminating influence of an OSC signal on gain, the method including:
connecting n pump lasers through multiple wavelength division multiplexers in sequence to form an ultra-wideband pump optical signal source, wherein each pump laser emits pump laser in a band covering its respective wavelength band;
by an OSC signal receiving port, coupling an OSC detection optical signal acquired by the OSC signal receiving port itself with pump optical signals of the n pump lasers through a first wavelength division multiplexer, and further coupling the coupled pump optical signals to a transmission optical path through a second wavelength division multiplexer to complete pump amplification of a data optical signal, and channel monitoring of the transmission optical path by the OSC detection optical signal;
controlling, by a control unit, the corresponding n pump lasers to be in a non-working state, so as to detect intensity of the OSC detection optical signal by reusing a pump total power detection photodetector located on a pump main optical path;
adjusting, by the control unit, optical power of one or more pump lasers, having a same or similar frequency band with the OSC detection optical signal, in the n pump lasers controlled by the control unit, according to the intensity of the OSC detection optical signal.

Preferably, the controlling, by the control unit, the corresponding n pump lasers to be in the non-working state, specifically includes:
before preparing to initiate the n pump lasers to enter a working state, collecting, by the control unit, an output of the pump total power detection photodetector in real time, and if an effective detection result is acquired, recording the effective detection result as power intensity of the OSC detection optical signal; and
if no effective detection result is acquired, sending a request signal to a transmitting end of the OSC detection optical signal, so as to detect optical power of the OSC detection optical signal before initiating the n pump lasers to enter the working state.

Preferably, when adjusting the optical power of one or more pump lasers, having the same or similar frequency band with the OSC detection optical signal, in the n pump lasers controlled by the control unit, it is confirmed that a pump laser which is calibrated to be adjusted is a pump laser with the longest wavelength in the n pump lasers, the method specifically including:
denoting power of the pump laser with the longest wavelength as P_{pump-final}, a wavelength of the pump laser with the longest wavelength as λ_{pump-final}, power of the OSC detection optical signal as P_{osc-1}, P_{osc-2}, . . . , P_{osc-n}, and wavelengths of the OSC detection optical signal as λ_{osc}, including λₒₛₑ₋₁, λₒₛₒ₋₂, . . . , λₒₛₑ₋ₙ, n≥ 1; setting a proportionality coefficient of the power of the OSC detection optical signal equivalent to the power of the pump with the longest wavelength as K_{effective}, and a wavelength interval between the wavelength of the OSC detection optical signal and the wavelength of the pump laser with the longest wavelength as Δλ=λ_{pump-final}-λ_{osc};
performing linear fitting on an equivalent coefficient and the wavelength interval, which is expressed as: K_{effective}=k×Δλ+b;
in actual gain control of the Raman amplifier, denoting required pump power of the longest wavelength as P_{pump-final-controlling}, then P_{pump-final-controlling}=K_{effective-1} ×P_{osc-1}+K_{effective-2}×P_{osc-2}+......+K_{effective-n}×P_{osc-n}, wherein if a wavelength λ_{osc-i} does not exist in the corresponding OSC detection optical signal in a real-time situation, a corresponding parameter P_{osc-i} in the formula is 0, and i is a parameter value between 1 and n.

Preferably, the control unit according to the optical intensity of the amplified data optical signal to be achieved by the transmission optical path specifically includes:
establishing a relationship between out-of-band ASE and gain, the relationship being: Out-of-band ASE=K×Gain+b+pointloss; and realizing control over the gain by controlling power of the out-of-band ASE, where K is a linear relationship constant between the out-of-band ASE and the gain, b is an influence parameter, and pointloss is connection loss between the pump laser and an optical fiber.

In a fourth aspect, the present disclosure further provides a control unit device for implementing the control method for an ultra-wideband Raman amplifier for eliminating the influence of an OSC signal on gain according to the second aspect or the third aspect, the device including:
at least one processor; and a memory in communication connection with the at least one processor, wherein the memory stores instructions executable by the at least one processor, and the instructions are executed by the processor to perform the control method for an ultra-wideband Raman amplifier for eliminating the influence of an OSC signal on gain according to the first aspect.

In a fifth aspect, the present disclosure further provides a non-transitory computer storage medium storing computer-executable instructions, which are executed by one or more processors to perform the control method for an ultra-wideband Raman amplifier for eliminating the influence of an OSC signal on gain according to the second aspect or the third aspect.

According to the present disclosure, by equating the power of a monitoring channel co-transmitted with a Raman pump laser in a transmission system to the pump power of the longest-wavelength, the influence of the power of the monitoring channel OSC on the gain control accuracy can be eliminated, the power of the longest-wavelength pump laser itself is reduced, the power consumption is reduced, and the gain control accuracy of the overall system is improved.

Through a special optical path design, in an application scenario of an ultra-wideband Raman amplifier, the present disclosure retains the OSC monitoring wavelength near 1510 nm while ensuring larger Raman gain for the OSC monitoring wavelength, greatly extending the OSC transmission span and enhancing the transmission performance.

### BRIEF DESCRIPTION OF THE DRAWINGS

To clarify the technical solutions in the embodiments of the present disclosure more clearly, the accompanying drawings used in the embodiments are briefly introduced below. Obviously, the drawings described below are only some embodiments of the present disclosure, and for those of ordinary skill in the art, other drawings can be obtained according to these drawings without paying creative efforts.
FIG. 1 is a schematic diagram of an optical path structure in which an OSC channel is introduced into a conventional data transmission channel according to an embodiment of the present disclosure;
FIG. 2 is a schematic diagram of an optical path structure of an ultra-wideband C++ & L++ Raman fiber amplifier for eliminating influence of OSC channel power according to an embodiment of the present disclosure;
FIG. 3 is a schematic diagram of an optical path structure suitable for an ultra-wideband Raman amplifier by referring to a manner in which an OSC channel is introduced into a conventional data transmission channel according to an embodiment of the present disclosure;
FIG. 4 is a schematic diagram of a serial connection manner between pump lasers according to an embodiment of the present disclosure;
FIG. 5 is a schematic diagram of a parallel connection manner between pump lasers according to an embodiment of the present disclosure;
FIG. 6 is a schematic flow chart of a control method for an ultra-wideband Raman amplifier for eliminating influence of an OSC signal on gain according to an embodiment of the present disclosure;
FIG. 7 is a schematic diagram of another optical path structure of an ultra-wideband C++ & L++ Raman fiber amplifier for eliminating influence of OSC channel power according to an embodiment of the present disclosure;
FIG. 8 is a schematic flow chart of another control method for an ultra-wideband Raman amplifier for eliminating influence of an OSC signal on gain according to an embodiment of the present disclosure;
FIG. 9 is a schematic diagram of another optical path structure of an ultra-wideband C++ & L++ Raman fiber amplifier for eliminating influence of OSC channel power according to an embodiment of the present disclosure;
FIG. 10 is a schematic diagram of naming manner for three port of a WDM according to an embodiment of the present disclosure;
FIG. 11 is a schematic diagram of wavelength characteristics of a band-pass three-port WDM according to an embodiment of the present disclosure;
FIG. 12 is a schematic diagram of wavelength characteristics of a high-low pass three-port device according to an embodiment of the present disclosure;
FIG. 13 is a schematic diagram of a result of influence of OSC channel power on gain of an ultra-wideband Raman amplifier according to an embodiment of the present disclosure;
FIG. 14 is a schematic diagram of a gain control effect after equating the power of an OSC channel to the pump power of a longest-wavelength according to an embodiment of the present disclosure;
FIG. 15 is a schematic diagram of a structure of a control unit device according to an embodiment of the present disclosure.

### DETAILED DESCRIPTION

In order to make the objectives, technical solutions, and advantages of the present disclosure clearer, the present disclosure will be further described in detail below with reference to the accompanying drawings and embodiments. It should be understood that the specific embodiments described herein are only used to explain the present disclosure, but not to limit the present disclosure.

In the description of the present disclosure, the orientation or position relationship indicated by the terms "inner", "outer", "longitudinal", "lateral", "upper", "lower", "top", "bottom" and the like is based on the orientation or positional relationship shown in the drawings, which is only for the purpose of describing the present disclosure rather than requiring the present disclosure must be constructed and operated in a specific orientation, and which should not be understood as a limitation to the present disclosure.

For an OSC channel in an optical communication system, an OSC detection optical signal generally uses an uncooled laser of 1510±6.5 nm, and the output power is generally equal to or less than 5 mW (the output power≤5 mW), that is, 7 dBm. For a Raman amplifier with a gain of less than 14 dB, this power level has minimal influence on Raman gain. However, for a large-gain ultra-wideband Raman fiber amplifier (such as a bandwidth exceeding 46 nm, or even reaching a range of 100 nm) involved in the present disclosure, this power level significantly affects Raman gain.

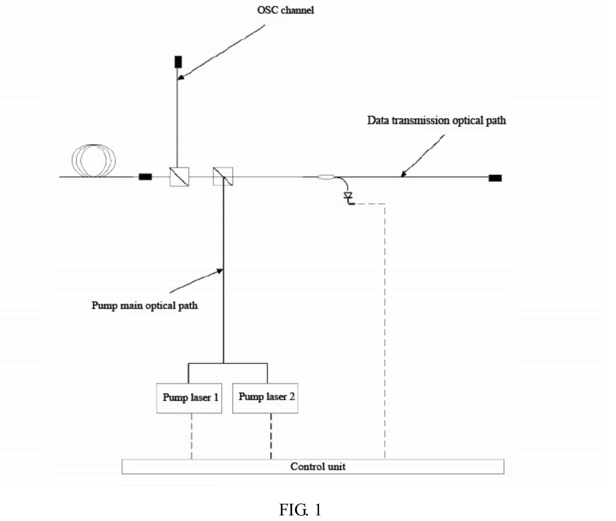

The present disclosure adopts a method of integrating an OSC demultiplexer inside an ultra-wideband Raman pump module, redirects the OSC channel, which is conventionally directly injected into a data transmission optical path (as shown in FIG. 1, which is a schematic diagram of a conventional OSC detection principle architecture) to a side of a pump main optical path (in an embodiment of the present disclosure, it may also be implemented to be injected to a pump branch optical path, which is also one of feasible implementation manners), monitoring power of the OSC detection optical signal in the same direction as the pump, and equating the power of the OSC wavelength to the power of the closest Raman pump wavelength according to a certain proportion during normal operation, so as to eliminate the influence of the OSC on the Raman gain. In a current ultra-wideband C++ & L++ (1524-1627 nm) communication system, the frequency interval between the shortest wavelength (e.g., 1420 nm) of the Raman pump wavelength and the 1510 nm OSC channel will be larger than 12 THz, approaching the maximum Raman gain frequency shift of 13.2 THz. Moreover, the OSC may already fall within the pump wavelength range. Therefore, in a preferred solution of the present disclosure, the wavelength of the OSC channel needs to be accurately controlled by TEC, and the wavelength variation range does not exceed ±1 nm. Since the OSC detection optical signal needs to perform bit error detection, the pump wavelength and OSC wavelength must be separated by at least ± 1 nm.

In a specific implementation of the present disclosure, the gain control of the Raman amplifier is implemented by a feedforward+feedback manner. The feedforward method is to determine the power of each pump wavelength corresponding to different gains in a certain optical fiber in advance by a pre-calibration method, then pre-make a table of values corresponding to the gain and the pump power, store the table in an EEPROM, and during an operation, the power is retrieved based on the set gain; or perform linear or polynomial fitting (no more than a cubic term) on each pump power and the gain without looking up the table.

Next, core points described and analyzed in the present disclosure will be integrated and demonstrated in the form of technical solutions through specific embodiments. In addition, technical features involved in various embodiments of the present disclosure described below may be combined with each other as long as they do not conflict with each other.

### Embodiment 1

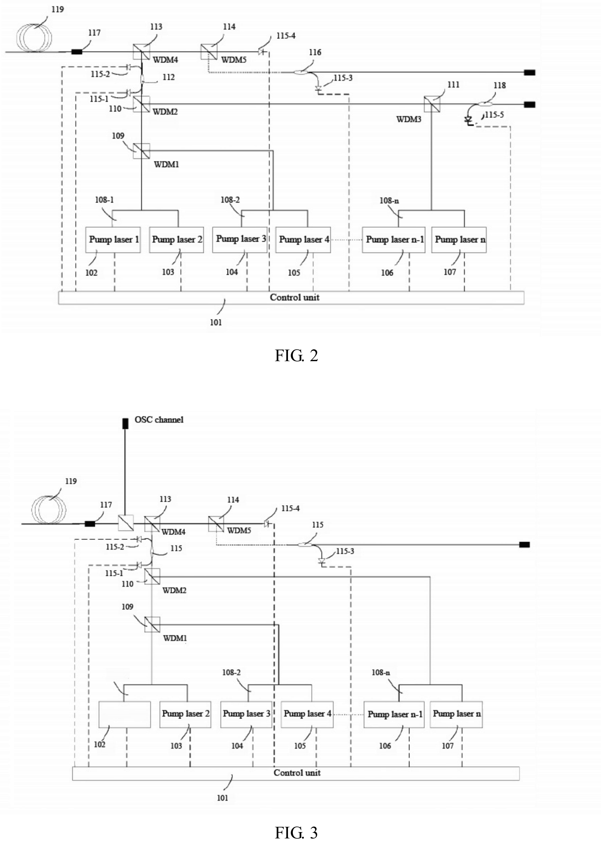

Embodiment 1 of the present disclosure provides an ultra-wideband Raman amplifier for eliminating influence of an OSC signal on gain. Referring to FIG. 2, the ultra-wideband Raman amplifier includes:

n pump lasers connected through multiple WDMs in sequence to form an ultra-wideband pump optical signal source, wherein each pump laser emits pump laser in a band covering its respective wavelength band.

For example, in FIG. 2, the multiple WDMs are represented as WDM1, WDM2, and the WDMs not shown by an ellipsis between pump laser 4 and pump laser n-1. In FIG. 2, it is also shown that outputs of pump laser 1 and pump laser 2 are directly combined into an optical path connected to WDM1, reflecting a real-world scenario where pump laser 1 and pump laser 2 may be integrated into a single optical module, and the direct connection between them can also be understood as internal optical path coupling within the module.

An OSC signal receiving port couples an OSC detection optical signal acquired by the OSC signal receiving port itself with pump optical signals of the n pump lasers through a first WDM (exemplarily represented as WDM3 in FIG. 2), and the coupled pump optical signals are further coupled to a data transmission optical path through a second WDM to achieve pump amplification of the data optical signal and channel monitoring of the transmission optical path by the OSC detection optical signal. To clearly illustrate the structure of FIG. 2 which implementing the technical solution of the present disclosure and the difference from the existing structure without introducing the optical path structure of the present disclosure, in the embodiment of the present disclosure, an optical path diagram of an ultra-wideband Raman amplifier that may be presented in the prior art based on FIG. 1 is further provided, as shown in FIG. 3. Note that FIG. 3 is not prior art, but rather demonstrates what the optical path diagram might look like following conventional thinking in the field, using FIG. 2 as a reference for prior art.

Before coupled with the pump optical signals of the n pump lasers, the OSC detection optical signal is further coupled with a first optical splitter (e.g., 118 shown in FIG. 2), and a first detector (e.g., 115-5 shown in FIG. 2) on an output port side of the first optical splitter transfers the detected intensity of the OSC detection optical signal to a control unit (e.g., 101 shown in FIG. 2), so that the control unit adjusts optical power of one or more pump lasers having a same or similar frequency band with the OSC detection optical signal, in the n pump lasers controlled by the control unit, according to the intensity of the OSC detection optical signal.

According to the embodiment of the present disclosure, by equating the power of a monitoring channel co-transmitted with a Raman pump laser in a transmission system to the pump power of a longest-wavelength, the influence of the power of the monitoring channel OSC on the gain control accuracy can be eliminated, the power of the longest-wavelength pump laser itself is reduced, the power consumption is reduced, and the gain control accuracy of the overall system is improved.

According to the embodiment of the present disclosure, through a special optical path design, in an application scenario of the ultra-wideband Raman amplifier, an OSC monitoring wavelength near 1510 nm (i.e., the above OSC detection optical signal) is still retained, and meanwhile, the OSC monitoring wavelength also obtains larger Raman gain. This greatly extends the OSC transmission span and enhances the transmission performance.

In the embodiment of the present disclosure, the n pump lasers are connected through multiple WDMs in sequence to form the ultra-wideband pump light source in the pump amplifier, which also is provided with a specific implementation manner, including:

Each pump laser has a pump branch optical path (for example, in FIG. 2, a path between WDM1 and pump laser 1 and pump laser 2, and a path between WDM2 and pump laser n-1 and pump laser n can be understood as the pump branch optical paths) and a shared pump main optical path (for example, a path between WDM1 and WDM4 in FIG. 2 can be understood as the pump main optical path).

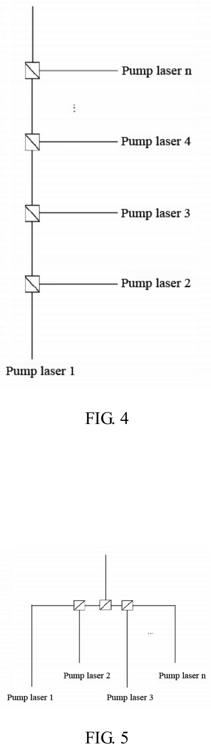

Each respective pump branch optical path couples its own pump optical signal to the pump main optical path through a total WDM (i.e., using an Arrayed Waveguide Grating (AWG for short) technology), so as to transmit the integrated pump optical signal to the transmission optical path through the second WDM connected to the pump main optical path (different from FIG. 2, FIG. 2 illustrates that each pump laser has an independent WDM); or each pump branch optical path couples its own pump light to the pump main optical path through a WDM owned by each pump branch optical path in a serial coupling manner as shown in FIG. 4 (FIG. 2 adopts this manner) or in a parallel coupling manner as shown in FIG. 5. These approaches have different cost and performance tradeoffs, with selection depending on specific product requirements.

In the embodiment of the present disclosure, the OSC signal receiving port couples the obtained detection optical signal with the pump optical signals of the n pump lasers through the first wavelength division multiplexer (WDM), specifically including:
acquiring a corresponding central wavelength of the OSC signal, and determining one or two target pump lasers in the owned n pump lasers, the pump optical signals of which have wavelengths closest to the central wavelength of the OSC signal, according to the central wavelength of the OSC signal;
arranging the first WDM on a pump optical path of the one or two target pump lasers, and coupling the OSC signal receiving port with one of input ports of the first WDM, wherein another input port of the first WDM is coupled with the pump optical path of the corresponding target pump laser.

For OSC channel power detection in this embodiment, if the specific OSC wavelength is known in advance, no narrow-band filter is needed before the photodetector, and only an optical splitter and a photodetector are needed. In order to adapt to OSC wavelengths of different customers, the OSC can be split into multiple paths after being split. When each path enters the photodetector for power detection, one or more narrow-band filters with different wavelengths are added first. In actual work, a proportionality coefficient when determining equivalent power is determined according to a wavelength interval between the detected wavelength of a certain path and the wavelength of the longest-wavelength pump laser.

### Embodiment 2

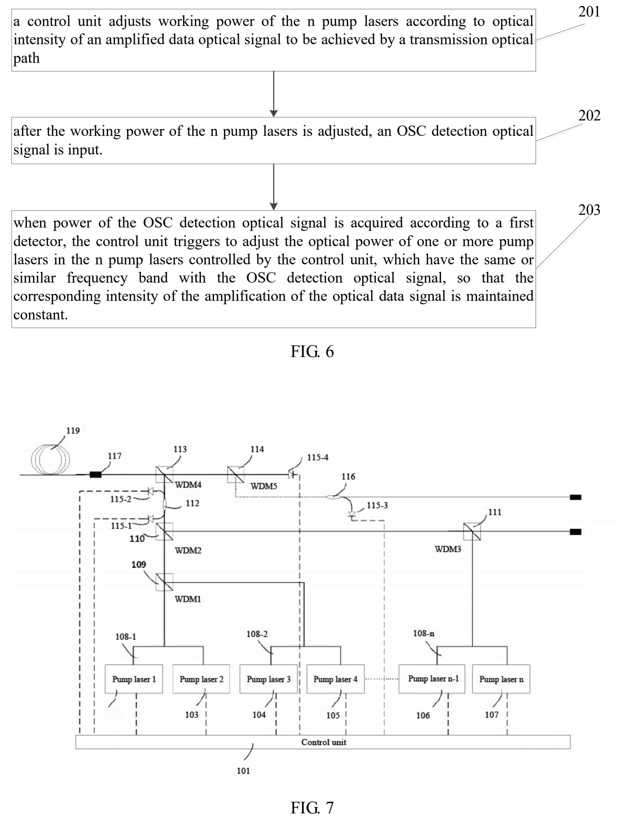

The present disclosure provides a control method for an ultra-wideband Raman amplifier for eliminating influence of an OSC signal on gain, using the ultra-wideband Raman amplifier for eliminating influence of an OSC signal on gain according to embodiment 1. As shown in FIG. 6, the method includes:

In step 201, a control unit adjusts working power of the n pump lasers according to optical intensity of an amplified data optical signal to be achieved by a transmission optical path.

In step 202, after the working power of the n pump lasers is adjusted, an OSC detection optical signal is input.

In step 203, when power of the OSC detection optical signal is acquired according to a first detector, the control unit triggers to adjust the optical power of one or more pump lasers in the n pump lasers controlled by the control unit, which have the same or similar frequency band with the OSC detection optical signal, so that the corresponding intensity of the amplification of the optical data signal is maintained constant.

According to the embodiment of the present disclosure, by equating the power of a monitoring channel co-transmitted with a Raman pump laser in a transmission system to the pump power of a longest-wavelength, the influence of the power of the monitoring channel OSC on the gain control accuracy can be eliminated, the power of the longest-wavelength pump laser itself is reduced, the power consumption is reduced, and the gain control accuracy of the overall system is improved.

According to the embodiment of the present disclosure, through a special optical path design, in an application scenario of the ultra-wideband Raman amplifier, an OSC monitoring wavelength near 1510 nm (i.e., the above OSC detection optical signal) is still retained, and meanwhile, the OSC monitoring wavelength also obtains significant Raman gain. This greatly extends the OSC transmission span and enhances the transmission performance.

In the embodiment of the present disclosure, when adjusting the optical power of one or more pump lasers having the same or similar frequency band with the OSC detection optical signal in the n pump lasers controlled by the control unit, it is confirmed that a pump laser which is calibrated to be adjusted is a pump laser with a longest wavelength in the n pump lasers, the method specifically including:
denoting power of the pump laser with the longest wavelength as P_{pump-final}, a wavelength of the pump laser with the longest wavelength as λ_{pump-final}, power of the OSC detection optical signal as P_{osc-1}, P_{osc-2}, . . . , P_{osc-n}, and wavelengths of the OSC detection optical signal as λ_{osc}, including λₒₛₑ₋₁, λₒₛₒ₋₂, . . . , λₒₛₑ₋ₙ, n≥ 1; setting a proportionality coefficient of the power of the OSC detection optical signal equivalent to the pump power of the longest wavelength as K_{effective}, and a wavelength interval between the wavelength of the OSC detection optical signal and the wavelength of the pump laser with the longest wavelength as Δλ=λ_{pump-final}-λ_{osc};
performing linear fitting on an equivalent coefficient and the wavelength interval, which is expressed as: K_{effective}=k×Δλ+b;
in actual gain control of the Raman amplifier, denoting required pump power of the longest wavelength as P_{pump-final-controlling}, then P_{pump-final-controlling}=K_{effective-1} ×P_{osc-1}+K_{effective-2}×P_{osc-2}+......+K_{effective-n}×P_{osc-n}, wherein if a wavelength λ_{osc-i} does not exist in the corresponding OSC detection optical signal in a real-time situation, a parameter P_{osc-i} in the corresponding formula is 0, and i is a parameter value between 1 and n.

On the other hand, the control unit according to the optical intensity of the amplified data optical signal to be achieved by the transmission optical path specifically includes:
establishing a relationship between out-of-band ASE and gain, the relationship being: Out-of-band ASE=K×Gain+b+pointloss; and realizing control over the gain by controlling power of the out-of-band ASE, where K is a linear relationship constant between the out-of-band ASE and the gain, b is an influence parameter, and pointloss is connection loss between the pump laser and an optical fiber.

According to the embodiment of the present disclosure, by equating the power of a monitoring channel co-transmitted with a Raman pump laser in a transmission system to the power of a longest-wavelength pump, the influence of the power of the monitoring channel OSC on the gain control accuracy can be eliminated, the power of the longest-wavelength pump laser itself is reduced, the power consumption is reduced, and the gain control accuracy of the overall system is improved. Through a special optical path design, an OSC monitoring wavelength about 1510 nm is still retained, and meanwhile, the OSC monitoring wavelength also obtains significant Raman gain. This greatly extends the OSC transmission span and enhances transmission performance.

### Embodiment 3

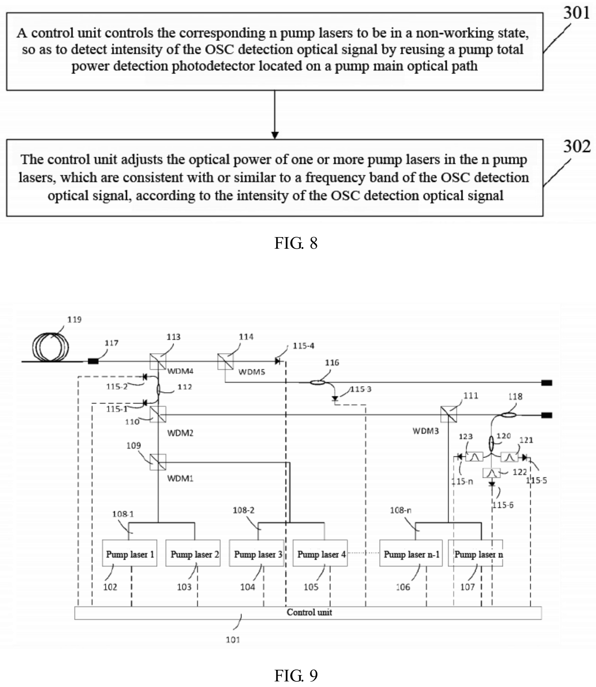

The embodiments of the present disclosure further provide a control method for an ultra-wideband Raman amplifier for eliminating influence of an OSC signal on gain. The method is different from the amplifier structure of Embodiment 1 and the supporting control method in Embodiment 2, the embodiments of the present disclosure propose a control method improvement to eliminate the first optical splitter and the first detector in Embodiment 1, slightly increasing control complexity but significantly reducing implementation costs. Before the implementation, the corresponding structure is implemented similar to Embodiment 1. As shown in FIG. 7, n pump lasers connected through multiple WDMs in sequence form an ultra-wideband pump optical signal source, wherein each pump laser emits a pump laser in a band covering its respective wavelength band; an OSC signal receiving port couples an OSC detection optical signal obtained by the OSC signal receiving port itself with pump optical signals of the n pump lasers through a first WDM, and the coupled pump optical signals are further coupled to a transmission optical path through a second WDM to complete pump amplification of a data optical signal and channel monitoring of the transmission optical path by the OSC detection optical signal. As shown in FIG. 8, the method includes:

In step 301, a control unit controls the corresponding n pump lasers to be in a non-working state, so as to detect intensity of the OSC detection optical signal by reusing a pump total power detection photodetector located on a pump main optical path.

In step 302, the control unit adjusts the optical power of one or more pump lasers having the same or similar frequency band with the OSC detection optical signal, in the n pump lasers controlled by the control unit, according to the intensity of the OSC detection optical signal.

According to the embodiments of the present disclosure, by equating the power of a monitoring channel co-transmitted with a Raman pump laser in a transmission system to the power of a longest-wavelength pump, the influence of the power of the monitoring channel OSC on the gain control accuracy can be eliminated, the power of the longest-wavelength pump laser itself is reduced, the power consumption is reduced, and the gain control accuracy of the overall system is improved.

According to the embodiments of the present disclosure, through a special optical path design, in an application scenario of an ultra-wideband Raman amplifier, an OSC monitoring wavelength near 1510 nm (i.e., the above OSC detection optical signal) is still retained, and meanwhile, the OSC monitoring wavelength also obtains larger Raman gain. This greatly extends the OSC transmission span and enhances the transmission performance.

For the above-mentioned control unit controlling the corresponding n pump lasers to be in the non-working state, a relatively complete implementation scheme exists, specifically including:
before preparing to initiate the n pump lasers to enter a working state, the control unit collects an output of the pump total power detection photodetector in real time, and if an effective detection result is obtained, records the effective detection result as power intensity of the OSC detection optical signal; and
if no effective detection result is obtained, a request signal is sent to a transmitting end of the OSC detection optical signal, so as to detect optical power of the OSC detection optical signal before initiating the n pump lasers to enter the working state.

In the embodiment of the present disclosure, as described in Embodiment 1, when adjusting the optical power of one or more pump lasers, having the same or similar frequency band with the OSC detection optical signal, in the n pump lasers controlled by the control unit, it is confirmed that a pump laser to be calibrated and adjusted is a pump laser with the longest wavelength in the n pump lasers, the method specifically including:
denoting power of the pump laser with the longest wavelength as P_{pump-final}, a wavelength as λ_{pump-final}, power of the OSC detection optical signal as P_{osc-1}, Pₒₛₑ₋₂, . . . , P_{osc-n}, and wavelengths of the OSC detection optical signal as λ_{osc}, including λₒₛₑ₋₁, λ _{osc-2}, . . . , λ_{osc-n}, n≥ 1; setting a proportionality coefficient of the power of the OSC detection optical signal equivalent to the power of the pump with the longest wavelength as K_{effective}, and a wavelength interval between the wavelength of the OSC detection optical signal and the wavelength of the pump laser with the longest wavelength as Δλ=λ_{pump-final}-λ_{osc};
performing linear fitting on the equivalent coefficient and the wavelength interval, which is expressed as: K_{effective}=k×Δλ+b;
in actual gain control of the Raman amplifier, denoting required pump power of the longest wavelength as P_{pump-final-controlling}, then P_{pump-final-controlling}=K_{effective-1} ×P_{osc-1}+K_{effeetive-2×}P_{osc-2}+......+K_{effeetive-n}×P_{osc-n}, wherein if a wavelength λ_{osc-i} does not exist in the corresponding OSC detection optical signal in a real-time situation, a corresponding parameter Pₒₛₑ₋ᵢ in the formula is 0, and i is a parameter value between 1 and n.

On the other hand, the control unit according to the optical intensity of the amplified data optical signal to be achieved by the transmission optical path specifically includes:
establishing a relationship between out-of-band ASE and gain, the relationship being: Out-of-band ASE=K×Gain+b+pointloss; and realizing control over the gain by controlling power of the out-of-band ASE, where K is a linear relationship constant between the out-of-band ASE and the gain, b is an influence parameter, and pointloss is connection loss between the pump laser and an optical fiber.

### Embodiment 4

The embodiment of the present disclosure focuses on describing the connection relationship and characteristics of internal structural components of FIG. 2 cited in Embodiment 1; that is, a relatively complete description is made on the structural characteristics of the technical scenario of FIG. 2 used in the technical solution of Embodiment 1. Here, it should not be understood that the technical solution of Embodiment 1 is only applicable to the structural scenario of FIG. 2.

FIG. 2 shows an optical path structure of an ultra-wideband Raman fiber amplifier for eliminating the influence of OSC optical power on ultra-wideband Raman gain. In FIG. 2, an optical path structure of an ultra-wideband Raman amplifier is added a fixed OSC detection optical signal to a pump band, including sequentially connected pump laser 1 (marked as 102 in FIG. 2), pump laser 2 (marked as 103 in FIG. 2), pump laser 3 (marked as 104 in FIG. 2), pump laser 4 (marked as 105 in FIG. 2), . . . , pump laser n-1 (marked as 106 in FIG. 2), pump laser n (marked as 107 in FIG. 2), pump depolarization combiners with isolators 108-1, 108-2, ... , 108-n, pump/pump WDM1 (marked as 109 in FIG. 2), pump/pump WDM2 (marked as 110 in FIG. 2), pump/OSC channel WDM3 (marked as 111 in FIG. 2), bidirectional coupler 112, pump reflection photodetector 115-1, pump total power detection photodetector 115-2, pump/pump WDM4 (marked as 113 in FIG. 2), out-of-band ASE filter WDM5 (marked as 114 in FIG. 2). A transmission end of out-of-band ASE filter WDM5 is an out-of-band optical frequency component, and is directly connected to photodetector 115-4. A reflection end of out-of-band ASE filter WDM5 is a signal optical frequency component, and after being split by coupler 116, a small end enters photodetector 115-3, while a large end is used as a signal output. An OSC port receives external fixed-wavelength OSC channel light. After the received OSC signal is split by coupler 118, a small end enters photodetector 115-5, and a large end enters a transmission end of pump/OSC channel WDM3 (marked as 111 in FIG. 2). 117 in FIG. 2 is an isolator, and 119 is a transmission optical fiber of a normal digital optical signal located upstream of the pump amplifier proposed by the present disclosure.

FIG. 9 extends FIG. 2 in that the OSC channel specifically includes multiple wavelengths, and the OSC channel power is simultaneously monitored in the optical path structure. The pump combining and signal power are basically the same as those in FIG. 2. The differences are that the OSC port receives external fixed-wavelength OSC channel light, and after the received OSC signal is split by coupler 118, a small end is then split into multiple paths of light by coupler 120, then the split multiple paths of light are all added with narrow-band filters with different wavelengths before entering a PD, such as narrow-band filter 121, narrow-band filter 122, narrow-band filter 123, . . . , and then enter photodetector 115-5, photodetector 115-6, . . . , photodetector 115-n.

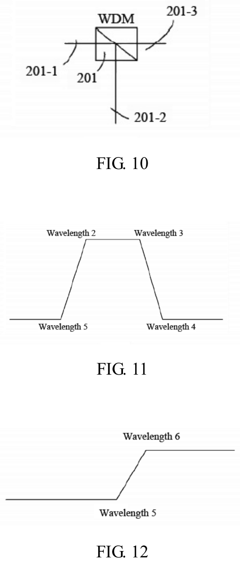

FIGS. 10-12 show a naming manner of each port of the three-port WDM device in FIG. 2 and FIG. 9. For three-port WDM 201, a common port is 201-1, a reflection port is 201-2, and a transmission port is 201-3. For a band-pass three-port WDM, if a wavelength range is between wavelength 2 and wavelength 3, the wavelength is a transmission port, a range between wavelength 1 and wavelength 2 or between wavelength 3 and a middle wavelength is a forbidden range, and a wavelength less than wavelength 2 or larger than wavelength 3 is a reflection port. For a high-low pass three-port WDM, a wavelength less than wavelength 5 is a reflection end or a transmission end, a range between wavelength 5 and wavelength 6 is a forbidden range, and a wavelength larger than wavelength 6 is a transmission end or a reflection end. Therefore, each WDM in FIGS. 2 and 9 may be a band-pass three-port device or a high-low pass device, which is designed according to a specific wavelength.

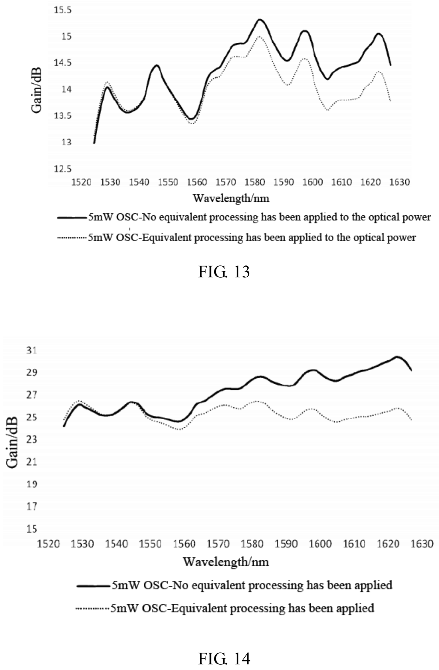

In this embodiment, the gain of a small-gain ultra-wideband C++ & L++ Raman amplifier is 14 dB, and the gain of a large-gain ultra-wideband C++ & L++ Raman amplifier is 25 dB. The method realizes accurate gain control of the ultra-wideband Raman amplifier mainly by equating the external OSC channel power to the power of the longest-wavelength pump laser according to a certain proportion. FIG. 13 is a gain spectrum of the small-gain amplifier controlled by the method, which shows the influence of 5 mW external OSC optical power on the gain of the 14 dB ultra-wideband Raman amplifier. FIG. 14 is a gain spectrum of the large-gain Raman amplifier controlled by the method, which shows the influence of 5 mW external OSC optical power on the gain of the 25 dB ultra-wideband Raman amplifier. It can be found from the figures that the gain control effect achieved by the equivalent power method is ideal, and the best gain flatness effect can be achieved.

### Embodiment 5

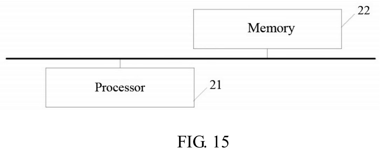

FIG. 15 illustrates a schematic diagram of architecture of a control device for an ultra-wideband Raman amplifier for eliminating the influence of an OSC signal on gain according to an embodiment of the present disclosure. The control device for an ultra-wideband Raman amplifier for eliminating the influence of an OSC signal on gain in this embodiment includes one or more processors 21 and a memory 22. FIG. 15 takes one processor 21 as an example.

The processor 21 and the memory 22 may be connected through a bus or in another manner, and FIG. 15 takes connection through a bus as an example.

The memory 22, as a non-transitory computer-readable storage medium, may be used to store non-transitory software programs and non-transitory computer-executable programs, such as the control method for an ultra-wideband Raman amplifier for eliminating the influence of an OSC signal on gain in Embodiment 1. The processor 21 executes the control method for an ultra-wideband Raman amplifier for eliminating the influence of an OSC signal on gain by running the non-transitory software programs and instructions stored in the memory 22.

The memory 22 may include a high-speed random access memory, and may also include a non-transitory memory, such as at least one magnetic disk storage device, a flash memory device, or other non-transitory solid-state storage devices. In some embodiments, the memory 22 may optionally include a memory remote from the processor 21, and these remote memories may be connected to the processor 21 through a network. Examples of the above network include, but are not limited to, the Internet, an intranet, a local area network, a mobile communication network, and a combination thereof.

The program instructions/modules are stored in the memory 22, and when executed by the one or more processors 21, execute the control method for an ultra-wideband Raman amplifier for eliminating the influence of an OSC signal on gain in Embodiment 1, for example, execute the steps shown in FIGS. 6 and 8 described above.

It should be noted that contents such as information interaction and execution processes between modules and units in the above device and system are based on the same concept as the embodiments of the processing method of the present disclosure, and specific contents may refer to the description in the method embodiment of the present disclosure, which is not described herein again.

A person of ordinary skill in the art may understand that all or part of the steps in the various methods of the embodiments may be implemented by a program instructing relevant hardware. The program may be stored in a computer-readable storage medium, and the storage medium may include: a read-only memory (ROM), a random access memory (RAM), a magnetic disk, or an optical disk.

The above descriptions are only preferred embodiments of the present disclosure and are not intended to limit the present disclosure. Any modifications, equivalent substitutions, improvements, and the like made within the spirit and principle of the present disclosure shall be included in the scope of the present disclosure.

## Claims

1. An ultra-wideband Raman amplifier for eliminating influence of an OSC signal on gain, comprising:
n pump lasers connected through a plurality of wavelength division multiplexers in sequence to form an ultra-wideband pump optical signal source, wherein each pump laser emits pump laser in a band covering its respective wavelength band;
an OSC signal receiving port that couples an OSC detection optical signal obtained by the OSC signal receiving port itself with pump optical signals of the n pump lasers through a first wavelength division multiplexer, and the coupled pump optical signals are further coupled to a data transmission optical path through a second wavelength division multiplexer to complete pump amplification of a data optical signal and channel monitoring of the transmission optical path by the OSC detection optical signal;
wherein before being coupled with the pump optical signals of the n pump lasers, the OSC detection optical signal is further coupled with a first optical splitter, and a first detector on an output port side of the first optical splitter transfers detected intensity of the OSC detection optical signal to a control unit, so that the control unit adjusts optical power of one or more pump lasers, having a same or similar frequency band with the OSC detection optical signal, in the n pump lasers controlled by the control unit according to the intensity of the OSC detection optical signal.

2. The ultra-wideband Raman amplifier for eliminating influence of an OSC signal on gain according to claim 1, wherein the n pump lasers connected through a plurality of wavelength division multiplexers in sequence to form the ultra-wideband pump light source specifically comprise:
each pump laser has a pump branch optical path and a shared pump main optical path;
each respective pump branch optical path couples its own pump optical signal to the pump main optical path through a total wavelength division multiplexer, so as to transmit the integrated pump optical signal to the transmission optical path through the second wavelength division multiplexer connected to the pump main optical path; or each pump branch optical path couples its own pump light to the pump main optical path through its owned wavelength division multiplexer in a serial coupling manner or a parallel coupling manner.

3. The ultra-wideband Raman amplifier for eliminating influence of an OSC signal on gain according to claim 1, wherein the OSC signal receiving port couples the detection optical signal acquired by the OSC signal receiving port itself with the pump optical signals of the n pump lasers through the first wavelength division multiplexer, specifically comprising:
acquiring a central wavelength of a corresponding OSC signal, and determining one or two target pump lasers in the owned n pump lasers, pump optical signals of which have a wavelength closest to the central wavelength of the OSC signal, according to the central wavelength of the OSC signal;
arranging the first wavelength division multiplexer on a pump optical path of the one or two target pump lasers, and coupling the OSC signal receiving port with one of input ports of the first wavelength division multiplexer, wherein another input port of the first wavelength division multiplexer is coupled with the pump optical path of the corresponding target pump laser.

4. A control method for an ultra-wideband Raman amplifier for eliminating influence of an OSC signal on gain, using the ultra-wideband Raman amplifier for eliminating influence of an OSC signal on gain according to any one of claims 1-3, the method comprising:
adjusting, by a control unit, working power of the n pump lasers according to optical intensity of an amplified data optical signal to be achieved by a transmission optical path;
inputting an OSC detection optical signal after the working power of the n pump lasers is adjusted;
when a first detector has acquired power of the OSC detection optical signal, triggering, by the control unit, to adjust optical power of one or more pump lasers, having a same or similar frequency band with the OSC detection optical signal, in the n pump lasers controlled by the control unit, so that corresponding intensity of amplification of the data optical signal is kept consistent.

5. The control method for an ultra-wideband Raman amplifier for eliminating influence of an OSC signal on gain according to claim 4, wherein when adjusting the optical power of one or more pump lasers, having the same or similar frequency band with the OSC detection optical signal, in the n pump lasers controlled by the control unit, confirming that a pump laser that is calibrated to be adjusted is a pump laser with a longest wavelength in the n pump lasers, the method specifically comprises:
denoting power of the pump laser with the longest wavelength as P_{pump-final}, a wavelength of the pump laser with the longest wavelength as λ_{pump-final}, power of the OSC detection optical signal as Pₒₛₑ₋₁, Pₒₛₑ₋₂, . . . , P_{osc-n}, and wavelengths of the OSC detection optical signal as λ_{osc}, including λₒₛₑ₋₁, λₒₛₒ₋₂, . . . , λₒₛₑ₋ₙ, n≥ 1; setting a proportionality coefficient of the power of the OSC detection optical signal equivalent to pump power of the longest wavelength as K_{effective}, and a wavelength interval between the wavelength of the OSC detection optical signal and the wavelength of the pump laser with the longest wavelength as Δλ=λ_{pump-final}-λ_{osc};
performing linear fitting on an equivalent coefficient and the wavelength interval, which is expressed as: K_{eftective}=k×Δλ+b;
in actual gain control of the Raman amplifier, denoting required pump power of the longest wavelength as P_{pump-final-controlling}, then P_{pump-final-controlling}=K_{effective-1}×P_{osc-1}+K_{effective-2}×P_{osc-2}+......+K_{effeetive-n}×P_{osc-n}, wherein if a wavelength λ_{osc-i} does not exist in the corresponding OSC detection optical signal in a real-time situation, a parameter P_{osc-i} in the corresponding formula is 0, and i is a parameter value between 1 and n.

6. The control method for an ultra-wideband Raman amplifier for eliminating influence of an OSC signal on gain according to claim 4, wherein the adjusting, by the control unit, the working power of the n pump lasers according to the optical intensity of the amplified data optical signal to be achieved by the transmission optical path specifically comprises:
establishing a relationship between out-of-band ASE and gain, the relationship being: Out-of-band ASE=K×Gain+b+pointloss; and realizing control over the gain by controlling power of the out-of-band ASE, where K is a linear relationship constant between the out-of-band ASE and the gain, b is an influence parameter, and pointloss is connection loss between the pump laser and an optical fiber.

7. A control method for an ultra-wideband Raman amplifier for eliminating influence of an OSC signal on gain, the method comprising:
connecting n pump lasers through multiple wavelength division multiplexers in sequence to form an ultra-wideband pump optical signal source, wherein each pump laser emits pump laser in a band covering its respective wavelength band;
coupling, by an OSC signal receiving port, an OSC detection optical signal obtained by the OSC signal receiving port itself with pump optical signals of the n pump lasers through a first wavelength division multiplexer, and further coupling the coupled pump optical signals to a transmission optical path through a second wavelength division multiplexer, to complete pump amplification of a data optical signal and channel monitoring of the transmission optical path by the OSC detection optical signal;
controlling, by a control unit, the corresponding n pump lasers to be in a non-working state, so as to detect intensity of the OSC detection optical signal by reusing a pump total power detection photodetector located on a pump main optical path;
adjusting, by the control unit, optical power of one or more pump lasers, having a same or similar frequency band with the OSC detection optical signal, in the n pump lasers controlled by the control unit, according to the intensity of the OSC detection optical signal.

8. The control method for an ultra-wideband Raman amplifier for eliminating influence of an OSC signal on gain according to claim 7, wherein the controlling, by the control unit, the corresponding n pump lasers to be in the non-working state, specifically comprises:
before preparing to initiate the n pump lasers to enter a working state, collecting, by the control unit, an output of the pump total power detection photodetector in real time, and if an effective detection result is acquired, recording the effective detection result as power intensity of the OSC detection optical signal; and
if no effective detection result is acquired, sending a request signal to a transmitting end of the OSC detection optical signal, so as to detect optical power of the OSC detection optical signal before initiating the n pump lasers to enter the working state.

9. The control method for an ultra-wideband Raman amplifier for eliminating influence of an OSC signal on gain according to claim 7, wherein when adjusting the optical power of one or more pump lasers, having the same or similar frequency band with the OSC detection optical signal, in the n pump lasers controlled by the control unit, confirming that a pump laser which is calibrated to be adjusted is a pump laser with a longest wavelength in the n pump lasers, the method specifically comprises:
denoting power of the pump laser with the longest wavelength as P_{pump-final}, a wavelength of the pump laser with the longest wavelength as λ_{pump-final}, power of the OSC detection optical signal as P_{osc-1}, P_{osc-2}, . . . , P_{osc-n}, and wavelengths of the OSC detection optical signal as λ_{osc}, including λ_{osc-1}, λₒₛₒ₋₂, . . . , λₒₛₑ₋ₙ, n≥ 1; setting a proportionality coefficient of the power of the OSC detection optical signal equivalent to the power of the pump with the longest wavelength as K_{effective}, and a wavelength interval between the wavelength of the OSC detection optical signal and the wavelength of the pump laser with the longest wavelength as Δλ=λ_{pump-final}-λ_{osc};
performing linear fitting on an equivalent coefficient and the wavelength interval, which is expressed as: K_{effective}=k×Δλ+b;
in actual gain control of the Raman amplifier, denoting required pump power of the longest wavelength as P_{pump-final-controlling}, then P_{pump-final-controlling}=K_{effective-1}×P_{osc-1}+K_{effeetive-2}×P_{osc-2}+......+K_{effeetive-n}×P_{osc-n}, wherein if a wavelength λ_{osc-i} does not exist in the corresponding OSC detection optical signal in a real-time situation, a parameter P_{osc-i} in the corresponding formula is 0, and i is a parameter value between 1 and n.

10. The control method for an ultra-wideband Raman amplifier for eliminating influence of an OSC signal on gain according to claim 7, wherein adjusting, by the control unit, the working power of the n pump lasers according to the optical intensity of the amplified data optical signal to be achieved by the transmission optical path specifically comprises:
establishing a relationship between out-of-band ASE and gain, the relationship being: Out-of-band ASE=K×Gain+b+pointloss; and realizing control over the gain by controlling power of the out-of-band ASE, where K is a linear relationship constant between the out-of-band ASE and the gain, b is an influence parameter, and pointloss is connection loss between the pump laser and an optical fiber.

11. An ultra-wideband Raman amplifier for eliminating influence of an OSC signal on gain, which is configured to implement the control method for an ultra-wideband Raman amplifier for eliminating influence of an OSC signal on gain according to any one of claims 4-6, comprising:
sequentially connected pump laser 1 (102), pump laser 2 (103), pump laser 3 (104), pump laser 4 (105), ... , pump laser n-1 (106), and pump laser n (107), pump depolarization combiners with isolators 108-1, 108-2, . . . , 108-n, pump/pump wavelength division multiplexer WDM1 (109), pump/pump wavelength division multiplexer WDM2 (110), pump/OSC channel wavelength division multiplexer WDM 3 (111), bidirectional coupler (112), pump reflection photodetector (115-1), pump total power detection photodetector (115-2), pump/pump wavelength division multiplexer WDM4 (113), out-of-band ASE filter WDM5 (114), wherein a transmission end of the out-of-band ASE filter WDM5 is an out-of-band optical frequency component, and is directly connected to photodetector (115-4); a reflection end of the out-of-band ASE filter WDM5 is a signal optical frequency component, and after being split by a coupler (116), a small end enters a photodetector (115-3), and a large end is used as a signal output; an OSC port receives external fixed-wavelength OSC channel light, and after the received OSC signal is split by a coupler (118), a small end enters a photodetector (115-5), and a large end enters a transmission end of the pump/OSC channel wavelength division multiplexer WDM3 (111).

12. The ultra-wideband Raman amplifier for eliminating influence of an OSC signal on gain according to claim 11, wherein the small end entering the photodetector (115-5), specifically comprises:
after the received OSC signal is split by a coupler (118), a small end enters a coupler (120) to be split into multiple paths of light, and the split multiple paths of light are all added with a narrow-band filter (121), a narrow-band filter (122), a narrow-band filter (123) and a narrow-band filter (123) before entering a PD, and then enter a photodetector (115-5), a photodetector (115-6) and a photodetector (115-n).
